(19) Europäisches Patentamt
European Patent Office
Office européen des brevets

(11) Publication number: **0 181 839**
**A2**

# (12) EUROPEAN PATENT APPLICATION

(21) Application number: 85830254.0

(22) Date of filing: 10.10.85

(51) Int. Cl.⁴: C 03 C 25/02
C 08 J 5/08

(30) Priority: 10.10.84 IT 2309084

(43) Date of publication of application:
21.05.86 Bulletin 86/21

(84) Designated Contracting States:
AT BE CH DE FR GB LI LU NL SE

(71) Applicant: SOGIMI S.r.l.
Via N. Bixio, 2
Fino Mornasco (Como)(IT)

(72) Inventor: Snider, Bruno
Via Monticello 4
Capiago Intimiano(IT)

(74) Representative: Aimi, Luciano et al,
c/o Società Italiana Brevetti S.p.A. Via Carducci 8
I-20123 Milano(IT)

## (54) Aqueous emulsions of unsaturated polyester resins for sizing glass fibers.

(57) Emulsions of unsaturated polyester resins for dressing glass fibers for the production of glass reinforced resin articles are described herein. Peculiar characteristics of the invention are high mechanical stability, low hydrophylic property, high resistance to hydrolysis and a good substantivity and compatibility with the resin matrix of the final manufactured article.

EP 0 181 839 A2

Croydon Printing Company Ltd

"AQUEOUS EMULSIONS OF UNSATURATED POLYESTERS FOR DRESSING GLASS FIBERS"

The present invention concerns aqueous emulsions of unsaturated polyester resins for the dressing of glass fibers. It particularly, relates to qualitative improvements which represent new and welcome solutions to problems pertaining to a highly sofisticated technology.

As it is known, glass fibers in the various stages of their manufacture, must be subjected to suitable treatments with so-called dressing substances in order to attain the necessary properties of workability and of compatibility with polymeric matrices for the manufacture of composites.

These treatments are normally carried out with aqueous emulsions of resins which are applied already in the primary stage of production of the fibers, immediately after fusion-spinning, or in the successive stages.

Depending upon the type of use of the glass fibers, the dressing emulsions may be based upon resins belonging to different chemical families such as polyester, epoxide, polyacetyl vinylic, acrylic, polyurethane resins, etc. The main function of these resins is to form a protection film around the fiber in order to favor a proper gluieng of the monofilaments forming the original thread; to assure a protection against mechanical stresses encountered in the successive stages of manufacture; to form an interphase microlayer physically and chemically compatible with the polymeric matrices used in the production of glass reinforced resin articles; to exert a binding action in the production of wowen-non wowen felts, commonly

called mats.

One of the most important fields of application of glass fibers pertains to their combination with unsaturated polyester resins. Glass fibers for this use would require a dressing based upon resins of the same species of the matrix, that is unsaturated polyesters, in order to ensure, through chemical-physical substantivity, an ideal adhesion.

Emulsions of polyester resins have been used up to now in a limited fashion because of some problems pertaining to the production of the emulsion derived from already formed polymers and to the mechanical stability behaviour during application.

To date, the more widely used category of emulsions is that based on polyvinyl acetate.

This type of emulsions offers many advantages during the production stage of the fibers, however it does limit, primarily in glass fibers used for glass-polyester articles, the possibility to develop compatibility properties to a maximum level and chemical and hydrolytic resistances because of the hydrosensitivity of emulsions of polyvinyl acetate.

Above all, when it is required a dressing with a fiber-binding function for the production of a felt of mat, it is particularly felt the necessity of substituting the emulsion of polyvinyl acetate with an emulsion based on unsaturated polyester also in view of the fact that, in such a case, the percentage of use is higher. In particular, for this specific application, difficulties have always been encountered in providing a suitable emulsion of unsaturated polyester which would embody, at the same time, the required properties:

- good binding power
- wide range of compatibility with unsaturated polyester resins of different monomeric derivation
- low degree of hydrophylic property and of hygroscopicity after application on the fibers
- high mechanical stability of the emulsion layer
- possibility of modulating, according to requirements, its degree of solubility in monomeric solutions of the matrices' resins
- possibility of adjusting the degree of plasto-elasticity, of resilience or of rigidity according to the requirements.

With the invention herein described the above noted results have been achieved.

Fundamental points for obtaining this result are the correct selection of emulsifying agents and their limited dosage for ensuring the minimum possible hydrosensitivity of the dressing and the simultaneous use of a co-stabilizing substance formed by an alkyl ester of silicic or polysilicic acid.

The production of the emulsion comprises two distinct stages:

- synthesis of the polyester resin
- production of the emulsion.

The basic polyester resin may be prepared by condensation reaction of dicarboxylic organic acids with glycols. The dicarboxylic acid may have, at least partially, ethylenic unsaturation. The formulation may comprise, though, modifications with the addition of mono, tri or polyvalent alcohols and of mono, tri and polycarboxylic acids as well as of hydroxy-acids or lactones.

Therefore, for example, the starting materials more commonly used may be the following: ethylene and propylene

glycol, isomeric butylene, pentylene and hexylene glycols, diethylene and polyethylene glycols, dipropylene and polypropylene glycols, neopentylene glucol, mono or polycondensation products of alkylene oxides with bisphenol or other glycols or polyvalent alcohols, maleic anhydride, fumaric acid, phthalic, tetrahydrophthalic and hexahydrophthalic anhydride, isophtalic acid, terephthalic, succinic, adipic, sebacic and azelaic acid; ethyl alcohol, propyl, butyl, pentyl and hexyl isomers, etc., cyclohexyl alcohol, glycerine, trimethylolethane, trimethylolpropane, pentaerythritol; benzoic, acetic, butyric and lauric acid; hydroxybenzoic acid, hydroxystearic acid, lactic acid, butyrolactone, caprolactone, etc.

Monomeric reactive substances such as styrene, vinyltoluene, methylmethacrylate, ethylacrylate, butylacrylate, ethylhexylacrylate, dicyclopentadiene, allyl alcohol, acrylic acid, and methacrylic acid may be also added to the reaction.

Synthesis of the polyester resin is conducted in accordance with known procedures of the esterification technique of monomers at temperatures comprised between 150 and 250°C in order to eliminate the reaction water by distillation. The reaction may be favored by the use of a transfer organic solvent suitable to establish conditions of azeotropic distillation with the esterification water.

During the reaction, provisions are adopted which allow to minimize losses of volatile monomers implementing suitable rectification systems. The desired final point of the reaction is determined by detection of physico-chemical properties such as the acidity index, the hydroxyl

number, viscosity, softening point, solubility parameters in specific solvents, etc. At the end of the reaction, if the operation has been conducted in azeotropic phase, the organic solvent used for the extraction under vacuum is eliminated. The resin produced after esterification may be admixed preferably with a controlled amount of water-mixable organic solvents, in order to promote the preparation of the emulsion; monomers such as styrene, diallyl phthalate, diallyl fumarate, acrylates or methacrylates may also be added.

In the second stage, the preparation of the emulsion is carried out. The resin is added with emulsifying agents, co-stabilizing substances, and transformed in an emulsion in a suitable dispersing apparatus with a controlled addition of water, preferably deionized water.

With a view to operate with a minimum possible dosage of emulgator in order to reduce the hydrolytic sensitivity, the use of mixtures of emulgators of the non ionic type is preferred, such as to obtain, in relation to a certain polyester formulation, the appropriate equilibrium value of hydroorganophylic property (HLB) and of specific compatibility.

The substance with co-stabilizing function is an ester of silicic or polysilicic acid with an alcohol; it is added preferably together with the emulsifying agent in the initial phase of preparation of the emulsion, however, it may also be added after formation of the emulsion.

The co-stabilizing agent is of the following general formula:

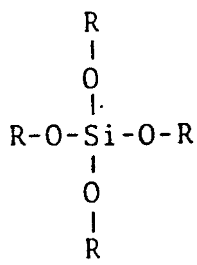

or

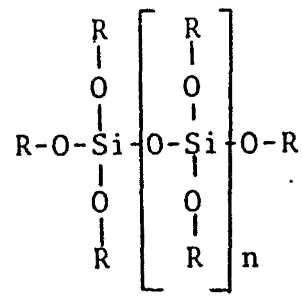

where R is an alkyl radical with a number of carbon atoms from 1 to 6 and n is equal or less than 4.

The emulsifying agents emploid in this invention are those of the non ionic kind because they do not encounter limitations in their use in dressing formulations which may indifferently contain cationic or anionic substances. The polyoxyethylene derivatives or alkyl phenols, polyoxy ethylene glycols containing hydrofobic functions and in general condensation products of alcohols and organic acids with ethylene oxyde are considered suitable for this use.

The polyester resin freshly prepared is transferred in a rotating turbine dissolver provided with a scraping blade for cleaning the lateral walls and with a heat conditioning jacket.

The emulgators and co-stabilizing agent are added and the mass is homogenized. The operation is such as not to overcome, preferably, the temperature of 50°C. Water is gradually added, taking care to re-establish quickly, by mixing the phase hmogeneity. Water addition is effected at a costant rate until the certain attainment of the "inversion" stage of the emulsion from "water in oil" to "oil in water". At this point the addition of the total water is completed and the emulsion is cooled

to room temperature.

The present invention will now be described more in detail on the basis of some embodiments which are reported as purely illustrative and not limitative examples.

EXAMPLE 1

In an esterification reactor provided with a rectifying column, a condenser and a phase separator, 155 parts by weight of propylene glycol are loaded. The stirrer is put in motion and 146 parts of adipic acid, 0.15 parts of stannous chloride dihydrate and 15 parts of toluene are loaded. A moderate flow of nitrogen is set in the reactor to make the reaction atmosphere inert and heating is applied. The plant is preset at azeotropic reflux conditions with toluene. Heating is applied in a continuous manner until the reaction begins with attendant distillation of water while successively heating is resorted to whenever appropriate, so as to adjust the reaction conditions which must never cause going over a temperature of 210°C in the reactor and of 97°C at the top of the rectifying column. These conditions are maintained until an acidity index (mg/g of KOH) equal or less than 5 is obtained. Cooling to 180°C is effected and 0.2 parts of triphenylphosphite, 196 parts of maleic anhydride, 0.7 parts of oxalic acid dihydrate are loaded. The mass is heated to 205-210°C and, while maintaining the conditions of azeotropic reaction, 205 parts of cyclohexanol are added gradually, in such a way as not to lower the temperature of the reaction below 195°C. The reaction is continued without controlling the temperature at the top of the rectification column but without going over 210°C in the reactor.

The reaction is conducted until an acidity index lower than 10 is achieved. The mass is cooled to 180°C, subjected to a vacuum of 720 mm of mercury and further cooled to 100°C. Vacuum is removed saturating the reactor atmosphere with nitrogen and the product is discharged in a suitable container for storing.

EXAMPLE 2

In a reactor fitted out as indicated in Example 1 and operating according to the same procedures, 319 parts by weight of propylene glycol are reacted, at the temperature of 240°C, with 249 parts of isophthalic acid, 249 parts of terephthalic acid and 0.3 parts of stannous chloride dihydrate until reaching an acidity index equal or less than 10. The reaction is further continued with 18.8 parts of trimethylolpropane, 126 parts of maleic anhydride and 0.5 parts of triphenylphosphite proceeding until final reaction values of Gardner viscosity equal to Z2-Z3 (with resin dissolved to 50% in ethoxy-ethanol acetate) and an acidity index of 10-20 are attained. A dilution is effected at a temperature of 200-230°C by adding 830 parts of a polyester prepared according to the procedure of Example 1. A dilution is then effected at a temperature of 120°C with 112 parts of acetone. Cooling to 70°C is effected and provision is made for the transfer of the mass to an emulsifier.

EXAMPLE 3

In a reactor fitted out as indicated in Example 1 and operating according to the same procedures of reaction, 60.8 parts by weight of propylene glycol, 20.8 parts of neopentyl glycol, 108 parts of maleic anhydride, 25 parts of dicyclopentadiene, 0.02 parts of triphenylphosphite, 0.2 parts of oxalic acid dihydrate and 0.04 parts

of stannous chloride dihydrate are reacted at the temperature of 190°C in the presence of 20 parts of toluene as the carrier solvent. The reaction is conducted until the polyester has a Gardner viscosity equal to V-W (detected at 60% dilution in ethoxy-ethanol acetate) and an acidity index comprised between 40 and 55.4 parts of ethoxy ethanol are added to the resin, a cooling down to 130°C is effected and 14 parts of acetone are added. Cooling to 70°C is effected and provision is made for transfer in an emulsifier.

EXAMPLE 4

The emulsion is prepared in a rotating emulsifying tank provided with a turbine stirrer eccentrically positioned in such a way that the outer-most portion of the fan maintains a distance of 5-10 cm from the wall. A scraping blade is positioned coaxially with the stirring body and has the function of continuously removing from the wall the viscous mass of the product being processed so as to bring it back promptly in the emulsion phase. The tank is provided with an external jacket for cooling or heating according to requirements.

In such an emulsifying tank 600 parts by weight of the product as described in Example 2, 20 parts of a non-ionic emulsifying agent based on polyoxyalkylene glycol formed by an inner molecular radical of polypropylene glycol with a molecular weight of about 4,000 and two lateral radicals of polyethylene glycol having overall a molecular weight of about 10,000, 20 parts of nonylphenol condensate with 20 molecules of ethylene oxide are loaded. The mass is homogenized and the temperature is raised to 50°C utilizing the heat exchange jacket. 12 parts of tetraethyl silicate are loaded. The mass is

homogenized and addition of 120 parts of deionized water is initiated. Every 5-10 minutes the addition of water is interrupted and mixing is conducted until attaining a perfect phase homogeneity.

After having added this quantity of water, the emulsion is near to the inversion stage. Circulation of cooling water is maintained in the jacket in order to lower the temperature of the mass being emulsified to about 40°C. One proceeds by further adding 195 parts of deionized water, reducing the rate of addition at the beginning so as to favour the formation of conveniently dimensioned particles both in terms of dimensions and in term of spread of dimensions.

The change of phase is detectable by a sudden decrease of viscosity during the addition of water. Once the addition of water is completed, the temperature inside the emulsified mass must be of 30-35°C. Cooling is maintained until a temperature of 25°C is obtained. One must operate in such a way as to complete the preparation of the emulsion (that is until completion of the water addition) within a maximum period of time of 60-90 minutes. The prepared emulsion has a content of dry substance of 60%. It is packed in its suitable containers passing through a filtration stage.

EXAMPLE 5

An emulsion as described in Example 4 is prepared with a change in the procedure such that the ethyl silicate is added at the end of the preparation of the emulsion instead of the beginning thereof. Tetraethyl silicate is let to be absorbed by the emulsion particles under mixing at 25-30°C for a period of 20 minutes.

EXAMPLE 6

Operating as in Example 4, an emulsion is prepared utilizing half the quantity of the same emulsifying agents. The other components of the formulation remain unchanged.

EXAMPLE 7

Operating as in Example 4 an emulsion is prepared by homogenizing 590 parts by weight of a polyester as prepared in Example 3, 17 parts of an emulgator based on polyalkylene glycol (see Example 4), 17 parts of an emulgator based on polyoxyethylated alkyl phenol (see Example 4). The emulsion is prepared utilizing 350 parts of deionized water.

Once the preparation of the emulsion is completed, 12 parts of ethyl silicate and 24 parts of diallyl phtalate are added and let to be adsorbed by the emulsified particles under mixing at the temperature of 25-30°C for a period of 20 minutes.

EXAMPLE 8

The Example 7 is modified by adding, after the formation of the emulsion, also 8 parts of benzoyl peroxide at 50% in a doughy suspension of dimethyl phtalate. The peroxide is dissolved in the same quantities of tetraethyl silicate and diallyl phtalate of Example 7 with the supplementary addition of 10 parts of acetone. This solution is let to be absorbed under mixing at 25-30°C for a period of time of 20 minutes.

EXAMPLE 9

The product according to the procedure of Example 4, is employed for the formulation of a binding dressing for glass fibers formed in a felt of mat. The behaviour of the emulsion during the application stage shows good qualities of mechanical stability to the stress induced

by the pumps of the feeding and reciclying systems. The emulsion confers to the final product a good binding power, excellent deformation properties of the mat, from which it follows a good workability, good substantivity and compatibility with matrices based on unsaturated polyester resin, excellent solubility in monomeric styrene and good hydrolytic resistance. These are highly desirable properties for glass mat used in the production of glass-polyester laminates or manufactured articles characterized by a high transparency, high mechanical properties, good workability.

Emulsions formulated according to the principles illustrated in the present description of the invention may be prepared from any polyester resin suitably modified in such a way as to obtain base products suitable for dressing glass fibers for the different fields of application. Therefore the examples reported herein are indicated only for demonstration purpose and not for limiting the scope of the invention.

CLAIMS

1. Formulations of aqueous emulsions of unsaturated polyesters for dressing glass fibers having a good mechanical stability during the application stages.

2. Formulation according to claim 1, having a low degree of hydrophylic property.

3. Formulations according to claims 1 and 2, having a high resistance to hydrolysis.

4. Formulations according to claims 1, 2, 3, having a high substantivity and physico-chemical compatibility with unsaturated polyester resins of different monomeric derivation which may constitute the matrices of glass-resin derivative products.

5. Formulations according to claims 1 to 4 having a high binding power.

6. Formulations according to claims 1 to 5 wherein the base unsaturated polyester is synthetized from saturated or unsaturated dicarboxylic organic acids with glycols.

7. Formulations according to claims 1 to 6 wherein the base unsaturated polyester may comprise modifications with mono, tri or polyvalent alcohols, mono, tri or poly carboxylic acids, hydroxy acids or lactones.

8. Formulations according to claims 1 to 7 wherein, for the synthesis of the polyester, there may be employed unsaturated monomers both in the polycondensation reaction stage and as additional solvents of the already synthetized polyester.

9. Formulations according to claims 1 to 8 wherein the emulsion of the unsaturated polyester is prepared using surface-active non-ionic substances.

10. Formulations according to claims 1 to 9 wherein an ester of the silicic or polysilicic acid with an aliphatic alcohol corresponding to the following general formula:

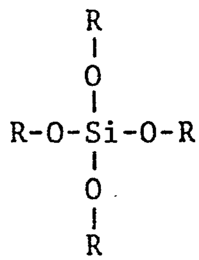

or

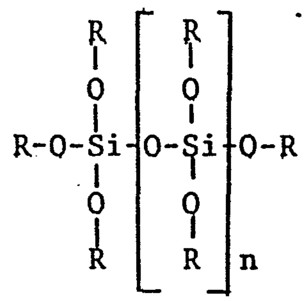

where R is an alkyl radical with a number of carbon atoms from 1 to 6 and n is equal or less than 4 is utilized as a co-stabilizing substance for the emulsion.